# EUROPÄISCHE PATENTANMELDUNG

(11) **EP 1 213 243 A2**
(43) Veröffentlichungstag der Anmeldung: **12.06.2002**
(21) Anmeldenummer: 01126008.0
(22) Anmeldetag: 31.10.2001
(51) Int. Cl.: B65G 59/02, B65G 57/03, B66F 7/06

(54) **Kommissionierarbeitsplatz**

(30) Priorität: 23.11.2000 DE 10059926
(71) Anmelder: SIEMENS AKTIENGESELLSCHAFT, 80333 München (DE)
(72) Erfinder: Sitzmann, Stefan, 64285 Darmstadt (DE)

(57) **Zusammenfassung**

Die Erfindung betrifft einen Kommissionierarbeitsplatz zum manuellen Abräumen von Waren von einem Warenstapel, der dem Kommissionierarbeitsplatz (K) auf einer Palette (6) zuführbar ist und zum Überführen der abgeräumten Ware (8), insbesondere auf das Zuführband eines Sorters (4), unter Verwendung einer Hubvorrichtung (12) für die Palette (6), mit der die Ware in eine ergonomisch günstige Abräumposition anhebbar ist. Dabei ist die Hubvorrichtung (12) auf einem in den Zuförderweg der Palette integrierten Kippgestell (10) angeordnet, mit dem die automatisch angeförderte Palette (6) und die darauf gestapelte Waren (8) in Richtung des Kommissionierarbeitsplatzes (K) neigbar sind.

## Beschreibung

Die Erfindung betrifft einen Kommissionierarbeitsplatz zum manuellen Abräumen von Waren von einem Warenstapel, der dem Kommissionierarbeitsplatz auf einer Palette zuführbar ist und zum Überführen der abgeräumten Ware, insbesondere auf das Zuführband eines Sorters, unter Verwendung einer Hubvorrichtung für die Palette, mit der die Ware in eine ergonomisch günstige Abräumposition anhebbar ist.

Kommissionierarbeitsplätze sind in Warenverteilsysteme integriert, in denen auf Zuförderern Paletten, mit darauf gestapelter Ware, beispielsweise von Hochregallagern kommend, automatisch transportiert werden. Am Kommissionierarbeitsplatz werden die Waren vereinzelt, indem sie von Kommissionierern der Palette entnommen und beispielsweise auf das Zuführband eines Sorters gelegt werden. Das Vereinzeln der Waren von Hand kann sehr anstrengend sein, insbesondere wenn es sich um unhandliche Waren oder solche von hohem Gewicht handelt. Deshalb begrenzen die Arbeitsschutzbestimmungen auch das Gewicht, das ein Kommissionierer pro Tag heben darf, so dass die Arbeitsleistung des Systems häufig durch die zu handelnde Ware und die geltenden Arbeitsschutzbedingungen beeinflußt ist.

Um das Entnehmen der Ware von dem Warenstapel zu erleichtern, ist es bekannt, die beispielsweise mit einem Hubstapler antransportierten Paletten auf Scherenhubtischen abzusetzen und durch Anheben des Scherenhubtisches die Palette mit der Ware Lage für Lage in die jeweils richtige Arbeitshöhe zu bringen, so dass der Kommissionierer sich nicht ständig bücken muß. Das erleichtert zwar die Arbeit des Kommissionierers, vermeidet jedoch nicht die Notwendigkeit, die Ware vom Stapel anzuheben und auf das Abtransportband zu überführen.

Aufgabe der vorliegenden Erfindung ist es, ausgehend von dem geschilderten Stand der Technik, einen Kommissionierarbeitsplatz zu schaffen, zu dem die Palette automatisch transportierbar ist und mit dem ein ergonomisch günstiges kraftsparendes Abräumen des Warenstapels ermöglicht wird.

Zur Lösung der Aufgabe wird erfindungsgemäß vorgeschlagen, dass die Hubvorrichtung auf einem in den Zuförderweg der Palette integrierten Kippgestell angeordnet ist, mit dem die automatisch angeförderte Palette und die darauf gestapelten Waren in Richtung des Kommissionierarbeitsplatzes neigbar sind. Ein so gestalteter Kommissionierarbeitsplatz ermöglicht nicht nur das automatische Heranfördern, Heben und Kippen der Palette sondern auch das automatische Rücklagern teilkommissionierter Paletten in das Hochlager. Durch die Neigung des Kippgestells wird die Ware in eine ergonomisch so günstige Position gebracht, dass es dem Kommissionierer möglich wird, die Ware von der jeweiligen Lage des Stapels zu ziehen bzw. zu kippen, ohne die Ware manuell anheben zu müssen. Dadurch kann der Kommissionierer pro Tag länger an den Arbeitsplatz eingesetzt werden, was die Leistung an dem Kommissionierarbeitsplatz deutlich erhöht.

Vorzugsweise beträgt der Neigungswinkel des Kippgestells zwischen 10° und 30°, eine Neigung, bei der sich die Ware sehr leicht vom Stapel herunterziehen läßt.

Nach einem weiteren Vorschlag der Erfindung ist die Hubvorrichtung mit einer in Richtung des Kommissionierarbeitsplatzes ausgerichteten Transportvorrichtung für die Palette versehen ist, beispielsweise mit einem Tragkettenförderer. Mit der Transportvorrichtung läßt sich die etwa von einem Hochregallager automatisch auf einer Förderbahn zugeführte Palette in den Bereich der Hubvorrichtung verbringen, wo sie nach dem Verschwenken des Kippgestells lageweise von dieser Hubvorrichtung so angehoben wird, dass die Waren seitlich vom Stapel auf dem Arbeitsplatz bzw. Abförderer gezogen werden können.

Als Hubvorrichtung kann vorzugsweise ein Scherenhubtisch Verwendung finden, wie er aus dem Stand der Technik vielfach bekannt ist. Durch Anordnung des Scherenhubtisches auf der Kippvorrichtung läßt sich die erfindungsgemäße Funktion erreichen, nämlich ein gleichzeitiges Kippen und Anheben der Palette zum Abräumen der Ware.

Nach einem weiteren Vorschlag der Erfindung ist vorgesehen, die Hubvorrichtung, die Transportvorrichtung und die Kippvorrichtung so in eine Arbeitsbühne zu integrieren, dass es möglich wird, das Abräumen der Palette von mehreren Seiten vorzunehmen, Der Kommissionierer steht dazu auf der Arbeitsbühne und entnimmt die Waren, ohne sich herunterbücken zu müssen.

Um zu verhindern, dass beim Neigen des Kippgestells die Ware unkontrolliert vom Stapel herunterrutscht, ist nach einem weiteren Merkmal der Erfindung das Kippgestell an der dem Kommissionierarbeitsplatz zugewandten Seite mit einer die Ware bei verschwenktem Kippgestell stützenden Rückwand versehen. Die Rückwand befindert sich bei verschwenktem Kippgestell unterhalb der Arbeitsebene, in der die Ware vom Stapel entnommen wird; durch Anheben der Hubvorrichtung wird jeweils die nächste Lage auf diese Abräumebene gebracht.

In vielen Fällen ist die Ware auf der Palette durch eine Schrumpffolie gesichert. Da beim Anheben der Hubvorrichtung die Ware an der sie stützenden Rückwand entlanggleitet, besteht die Gefahr, dass die die Ladung sichernde Schrumpffolie kleben bleibt und beschädigt wird. Das kann für nur halb abkommissionierte Paletten zu einem Problem führen, wenn bei der Rücklagerung der Palette in das Lager die beschädigte Folie die Ware nicht mehr hält. Dieses Problem löst die Erfindung dadurch, dass die Rückwand des Kippgestells mit einem in Heb- und Senkrichtung der Hubvorrichtung frei umlaufenden Gurt versehen ist. Der Gurt, der sich mit der Palette nach oben bewegt, verhindert eine Relativbewegung zwischen der Ware und der Rückwand des Kipprahmens und verhindert somit eine Beschädigung der die Ladung sichernden Schrumpffolie.

Dadurch, dass nach einem weiteren Merkmal der Erfindung vorgesehen ist, das Schwenklager für die hydraulisch Kippvorrichtung im Bereich des Kommissionierarbeitsplatzes in dessen Abräumhöhe anzuordnen, entsteht beim hydraulischen Verschwenken der Kippvorrichtung im Fußbereich des Kommissionierers ausreichend Platz zum Stehen. Beim Verschwenken des Kippgestells schwenkt die Rückwand nach außen, der Kommissionierer steht näher an der Ware, die Greiftiefe verringert sich.

Insgesamt ergibt sich durch die vorliegende Erfindung eine für den Kommissionierer günstigere Zuführung der Palette und ein ergonomisch leichteres Arbeiten, da die Ware leichter von der Palette gezogen bzw. gekippt werden kann.

Ein Ausführungsbeispiel der Erfindung ist in der Zeichnung dargestellt und wird nachfolgend beschrieben. Es zeigt:
- Figur 1: einen erfindungsgemäße Kommissionierarbeitsplatz von der Seite in schematischer Darstellung, und
- Figur 2: den Kommissionierarbeitsplatz nach Figur 1 während des Abräumens der Ware.

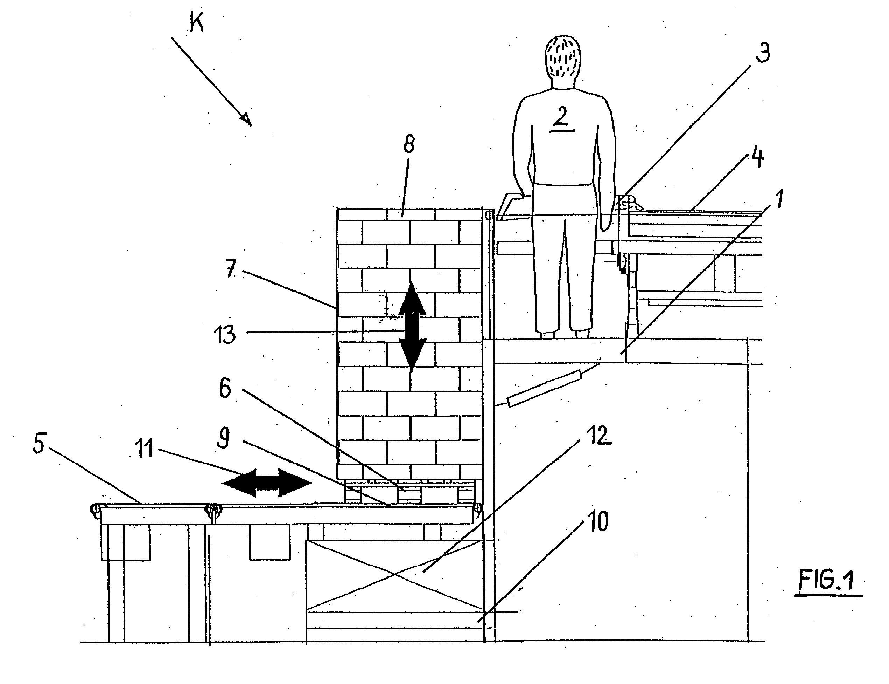

In Figur 1 ist mit 1 eine erhöhte Arbeitsbühne bezeichnet, auf der der Kommissionierer 2 vor einem Arbeitstisch 3 steht, an den das Zuführband 4 eines nicht weiter dargestellten Sorters anschließt. Auf der gegenüberliegenden Seite des Kommissionierarbeitsplatzes K ist ein Tragkettenförderer 5 schematisch angedeutet, über den eine Palette 6 mit einem darauf angeordneten Warenstapel 7 einzelner Waren 8 herantransportiert wird. An den Tragkettenförderer 5 schließt sich ein weiterer Tragkettenförderer 9 an, der Teil des in seiner Ruhelage befindlichen Kippgestelles 10 ist und der in der gleichen Ebene umläuft, wie der Tragkettenförderer 5. Somit läßt sich die Palette 6 mit dem Warenstapel 7 in Pfeilrichtung 11 dem Kommissionierarbeitsplatz K zuführen und bei Teilkommissionierung nach Förderrichtungsumkehr zu dem nicht gezeichneten Warenlager zurücktransportieren. Innerhalb des L-förmig ausgebildeten Kippgestelles 10, das mit einem horizontalen Schenkel unter den Bereich der Palette greift, ist die als Scherenhubtisch ausgebildete Hubvorrichtung 12 angeordnet, mit der der Tragkettenförderer 9 zusammen mit der aufliegenden Palette 6 und dem Warenstapel 7 in Pfeilrichtung 13 heb- und senkbar ist. Dadurch läßt sich die jeweils obere Lage des Warenstapels 7 mit der Ware 8 in Höhe des Arbeitstisches 3 und somit in eine ergonomisch richtige Arbeitshöhe für den Kommissionierer 2 verbringen.

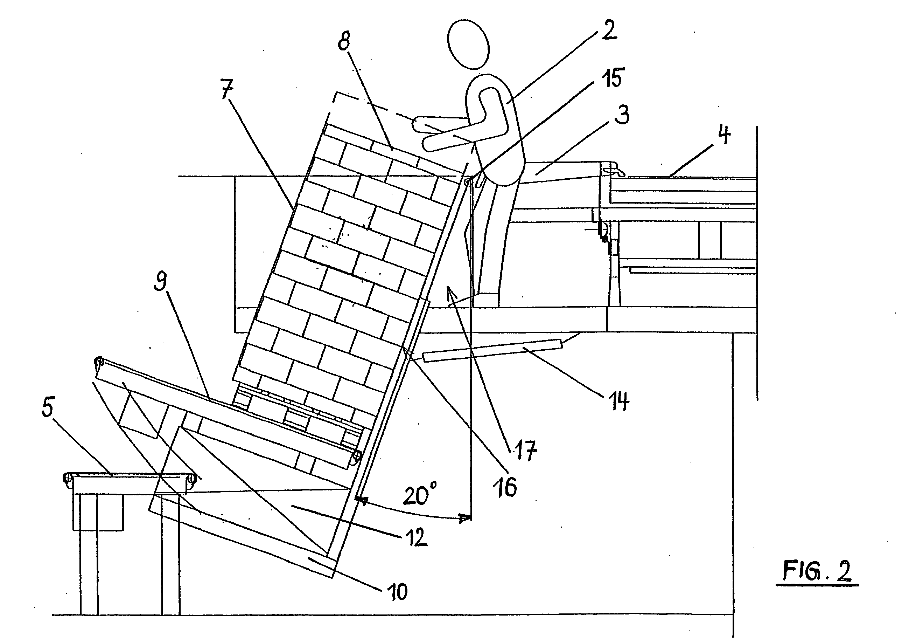

Wie in Figur 2 dargestellt, kann die Kippvorrichtung 10 über den Hypdraulikzylinder 14 um die Schwenkachse 15 um, beispielsweise 20°, so geneigt werden, dass die Ware 8 vom Kommissionierer 2 problemlos vom Warenstapel 7 heruntergezogen oder gekippt und auf den Arbeitstisch 3 überführt werden kann. Zusammen mit dem Kippgestell 10 verschwenkt auch der Tragkettenförderer 9 und der Scherenhubtisch 12. Während des Kippens liegt die Rückseite des Warenstapels 7 an der Rückwand 16 des Kippgestelles so an, dass ein Abrutschen der Ware von der Palette verhindert wird.

Dadurch, dass die Schwenkachse 15 am oberen Ende des Kippgestells 10 im Bereich des Arbeitstisches 3 angeordnet ist, ergibt sich beim Schwenken des Kippgestells 10 ein Freiraum 17 im Fußbereich des Kommissionierers 2, so dass dieser näher an den Warenstapel 7 herantreten kann. Weil damit die Greifweite verringert wird, wird das Arbeiten erleichtert.

Die Rückwand 16 des Kippgestells ist in nicht dargestellter Weise mit einem Gurt belegt, der in Hub- und Senkrichtung des Warenstapels 7 umläuft und eine Relativbewegung zwischen der Rückwand und der dieser zugewandten Rückseite des Warenstapels verhindert. Dadurch wird eine Beschädigung insbesondere von Schrumpffolien verhindert, mit denen Warenstapel 7 häufig gesichert sind.

## Patentansprüche

1. Kommissionierarbeitsplatz zum manuellen Abräumen von Waren von einem Warenstapel, der dem Kommissionierarbeitsplatz (K) auf einer Palette (6) zuführbar ist und zum Überführen der abgeräumten Ware (8), insbesondere auf das Zuführband eines Sorters (4), unter Verwendung einer Hubvorrichtung (12) für die Palette (6), mit der die Ware in eine ergonomisch günstige Abräumposition anhebbar ist,
**dadurch gekennzeichnet,**
**dass** die Hubvorrichtung (12) auf einem in den Zuförderweg der Palette integrierten Kippgestell (10) angeordnet ist, mit dem die automatisch angeförderte Palette (6) und die darauf gestapelten Waren (8) in Richtung des Kommissionierarbeitsplatzes (K) neigbar sind.

2. Kommissionierarbeitsplatz nach Anspruch 1,
**dadurch gekennzeichnet,**
**dass** der Neigungswinkel des Kippgestells (10) zwischen 10° und 30° beträgt.

3. Kommissionierarbeitsplatz nach Anspruch 1 und 2,
**dadurch gekennzeichnet,**
**dass** die Hubvorrichtung (12) mit einer in Richtung des Kommissionierarbeitsplatzes (K) ausgerichteten Transportvorrichtung (9) für die Palette (6) versehen ist.

4. Kommissionierarbeitsplatz nach Anspruch 3,
**dadurch gekennzeichnet,**
**dass** die Transportvorrichtung (9) ein Tragkettenförderer ist

5. Kommissionierarbeitsplatz nach Anspruch 3,
**dadurch gekennzeichnet,**
**dass** die Hubvorrichtung (12) ein Scherenhubtisch ist.

6. Kommissionierarbeitsplatz, nach einem der Ansprüche 1 bis 5,
**dadurch gekennzeichnet,**
**dass** die Hubvorrichtung (12), die Transportvorrichtung (9) und die Kippvorrichtung (10) in eine Arbeitsbühne (1) integriert sind.

7. Kommissionierarbeitsplatz nach einem der Ansprüche 1 bis 6,
**dadurch gekennzeichnet,**
**dass** das Kippgestell (10) an der dem Kommissionierarbeitsplatz (K) zugewandten Seite mit einer die Ware (8) bei geschwenktem Kippgestell (10) stützenden Rückwand (16) versehen ist.

8. Kommissionierarbeitsplatz nach Anspruch 7,
**dadurch gekennzeichnet,**
**dass** die Rückwand (16) des Kippgestells (10) mit einem in Heb- und Senkrichtung (13) der Hubvorrichtung (12) frei umlaufenden Gurt versehen ist.

9. Kommissionierarbeitsplatz nach einem der Ansprüche 1 bis 8,
**dadurch gekennzeichnet,**
**dass** das Schwenklager (15) für die Kippvorrichtung (10) im Bereich des Kommissionierarbeitsplatzes (K) in Abräumhöhe angeordnet ist und das Verschwenken der Kippvorrichtung (10) hydraulisch erfolgt.
